(19) **Europäisches Patentamt**
**European Patent Office**
**Office européen des brevets**

(11) **EP 3 070 461 B1**

(12) **EUROPEAN PATENT SPECIFICATION**

(45) Date of publication and mention
of the grant of the patent:
**04.12.2019 Bulletin 2019/49**

(51) Int Cl.:
**G01N 27/04** *(2006.01)*      **G01N 27/02** *(2006.01)*
**H01M 8/04537** *(2016.01)*      **H01M 8/1018** *(2016.01)*

(21) Application number: **16157515.4**

(22) Date of filing: **26.02.2016**

(54) **IMPEDANCE METHOD FOR CALCULATING PROTON CONDUCTIVITY OF A PROTON-CONDUCTING MEMBRANE AND PROTON CONDUCTIVITY MEASUREMENT DEVICE**

IMPEDANZ-VERFAHREN ZUR BERECHNUNG DER PROTONENLEITFÄHIGKEIT EINER PROTONLEITENDEN MEMBRAN UND PROTONENLEITFÄHIGKEITSMESSVORRICHTUNG

PROCÉDÉ D'IMPEDANCE DE CALCULATION DE CONDUCTIVITÉ PROTONIQUE D'UNE MEMBRANE CONDUCTRICE DE PROTONS ET DISPOSITIF DE MESURE DE CONDUCTIVITÉ PROTONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.03.2015 JP 2015055645**
**15.01.2016 JP 2016005682**

(43) Date of publication of application:
**21.09.2016 Bulletin 2016/38**

(73) Proprietor: **Panasonic Intellectual Property Management Co., Ltd.**
**Osaka-shi, Osaka 540-6207 (JP)**

(72) Inventors:
• **KIKUZUMI, Shinya**
**Osaka, 540-6207 (JP)**
• **YOSHINO, Shinji**
**Osaka, 540-6207 (JP)**

(74) Representative: **Vigand, Philippe et al**
**Novagraaf International SA**
**Chemin de l'Echo 3**
**1213 Onex - Genève (CH)**

(56) References cited:
**US-A1- 2014 197 851**

• **SOBOLEVA T ET AL: "Investigation of the through-plane impedance technique for evaluation of anisotropy of proton conducting polymer membranes", JOURNAL OF ELECTROANALYTICAL CHEMISTRY AND INTERFACIAL ELECTROCHEMISTRY, ELSEVIER, AMSTERDAM, NL, vol. 622, no. 2, 15 October 2008 (2008-10-15), pages 145-152, XP025471365, ISSN: 0022-0728, DOI: 10.1016/J.JELECHEM.2008.05.017 [retrieved on 2008-06-04]**
• **ARVAY A ET AL: "Characterization techniques for gas diffusion layers for proton exchange membrane fuel cells A review", JOURNAL OF POWER SOURCES, ELSEVIER SA, CH, vol. 213, 16 April 2012 (2012-04-16), pages 317-337, XP028493415, ISSN: 0378-7753, DOI: 10.1016/J.JPOWSOUR.2012.04.026 [retrieved on 2012-05-01]**
• **ZAPATA P ET AL: "High-throughput screening of ionic conductivity in polymer membranes", ELECTROCHIMICA ACTA, ELSEVIER SCIENCE PUBLISHERS, BARKING, GB, vol. 54, no. 15, 1 June 2009 (2009-06-01), pages 3899-3909, XP026040274, ISSN: 0013-4686, DOI: 10.1016/J.ELECTACTA.2009.02.009 [retrieved on 2009-02-11]**

EP 3 070 461 B1

**Description**

TECHNICAL FIELD

The technical field relates to a method of calculating proton conductivity and a proton conductivity measurement device which evaluates proton conductivity of an electrolyte film being used for a polymer electrolyte fuel cell.

BACKGROUND

A polymer electrolyte fuel cell (PEFC) has a configuration in which a film electrode bond member is configured by sequentially bonding a catalyst layer and a gas diffusion layer on both outer surfaces of an electrolyte film causing a power generation reaction, separators having the film electrode bond member interposed therebetween are set as a unit cell, and a required number of unit cells is stacked.

Recently, for the electrolyte film, a proton conductivity ion exchange film has been used, and particularly, a cation exchange film formed of a pearl or carbon polymer having a sulfonic acid group has been mainly applied.

By supplying the polymer electrolyte fuel cell with fuel gas containing hydrogen and oxidant gas containing oxygen as in air, and electrochemically reacting the fuel gas and the oxidant gas through an electrolyte film, power, heat, and water are simultaneously produced.

In the polymer electrolyte fuel cell, reaction of $H_2 \rightarrow 2H^+ + 2e^-$ occurs in a negative electrode, reaction of $1/2O_2 + 2H^+ + 2e^- \rightarrow H_2O$ occurs in a positive electrode, and thereby electric energy is generated. Hydrogen ions ($H^+$: proton) produced by the reaction in the negative electrode move inside the electrolyte film, and are used for reaction in the positive electrode.

In this way, movement (that is, proton conductivity) of the proton in the electrolyte film becomes a key indicator when performance of the electrolyte film is evaluated. The proton conductivity of the electrolyte film can be calculated by measuring an "impedance value" that is resistance when an AC current is applied to the electrolyte film.

Generally, measurement of the proton conductivity of the electrolyte film is performed by using an AC two-terminal method or an AC four-terminal method in a "plane direction" of the electrolyte film. For example, in the four-terminal method in which measurement is performed in a state where one set of voltage electrodes is disposed in the electrolyte film between current electrodes, voltage effects on contact resistors of the voltage electrodes are negligible, and thus, more accurate measurement can be performed by using the four-terminal method, compared to the two-terminal method.

However, in the polymer electrolyte fuel cell, proton conduction in the electrolyte film is performed in a "thickness direction". Furthermore, a nanofiber film is included in the electrolyte film as a reinforcing material, a method (for example, refer to Japanese Patent No. 5193394) of distributing density of nanofibers is proposed depending on a place, and it is expected that the proton conductivity in the "thickness direction" has a distribution in a plane. Performance of the electrolyte film may not be correctly evaluated only by the evaluation of the "plane direction" of the related art, and thus, it is necessary to measure proton conductivity in the "thickness direction".

In addition, a method of performing measurement by interposing the electrolyte film between one set of electrodes is proposed as a method of measuring the proton conductivity in the "thickness direction" (for example, Japanese Patent No. 5131671 and Japanese Patent No. 4268100). In Japanese Patent No. 5131671, electrolyte film 52 to be measured and multiple electrolyte films 51 and 53 stacked are interposed between one pair of electrodes 54 and 55, and thereby contact is stabilized, and impedance values can be measured by the AC two-terminal method.

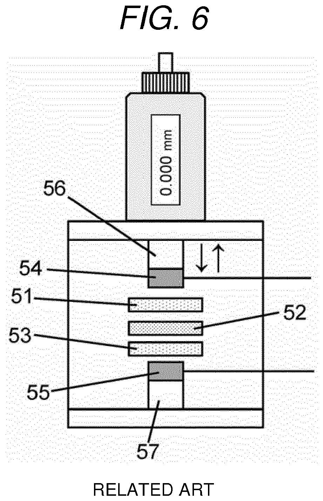

Fig. 6 is a schematic explanatory view illustrating a method of measuring proton conductivity of the related art.

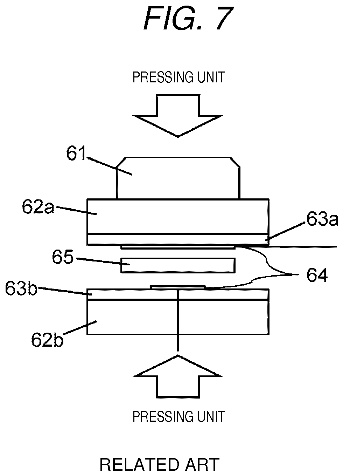

In Japanese Patent No. 4268100, contact of electrolyte film 65 to be measured which is interposed between one pair of electrodes 64 is stabilized by using a pressing unit, and an impedance value can be measured by using the AC two-terminal method. Fig. 7 is a schematic explanatory view illustrating a method of measuring the proton conductivity of the related art.

Finally, an article by Soboleva et al in Journal of Electroanalytical Chemistry 2008, 622, p.145-152 describes the investigation of the through plane impedance technique for evaluation of anisotropy of proton conducting polymer membranes.

An article by Arvay et al in Journal of Power Sources 2012, 213, p.317-337 proposes a review of characterization techniques for gas diffusion layers for proton exchange membrane fuel cells.

An article by Zapata et al in Electrochimica Acta 2009, 54, p.3899-3909 relates to high-throughput screening of ionic conductivity in polymer membranes.

SUMMARY

However, in configurations disclosed in Japanese Patent No. 5131671 and Japanese Patent No. 4268100, measurement is performed only on one pair of electrodes by using the AC two-terminal method, and thus, in case where an error occurs in a measured impedance value such as contact resistance between an electrolyte film and an electrode, correct proton conductivity may not be measured.

In view of the above problems, the present disclosure concerns a method of measuring proton conductivity and a proton conductivity measurement device which can accurately and simply measure proton conductivity of an electrolyte film in a "thickness direction".

According to a method of measuring proton conductivity, multiple pairs of electrodes having an electrolyte film, which is a target to be measured, interposed between the electrodes are configured, areas of the electrodes change by individually configuring or by combining the multiple pairs of electrodes, and impedance values are measured. Proton conductivity of the electrolyte film in a "thickness direction" is calculated from a relationship between the measured impedance values and the areas of the electrodes.

According to the configuration, proton conductivity of an electrolyte film is calculated by measuring at multiple points having areas different from each other, and thereby it is possible to reduce influence of errors with respect to measured values such as contact resistance between the electrolyte film and an electrode, and to accurately measure the proton conductivity of the electrolyte film in a "thickness direction".

BRIEF DESCRIPTION OF THE DRAWINGS

Fig. 1 is a schematic view illustrating proton conductivity measurement according to the present embodiment.
Figs. 2A and 2B are respectively a top plan view and a lateral plan view illustrating proton conductivity measurement according to the present embodiment.
Fig. 3 is a schematic view illustrating proton conductivity measurement according to another embodiment.
Fig. 4 is a top plan view illustrating proton conductivity measurement according to another embodiment.
Fig. 5 is a schematic view illustrating a proton conductivity measurement device according to the present embodiment.
Fig. 6 is a schematic view illustrating a method of measuring proton conductivity of the related art.
Fig. 7 is another schematic view illustrating the method of measuring proton conductivity of the related art.
Fig. 8 is a diagram illustrating measurement results according to an example.
Fig. 9 is a connection diagram illustrating a connection between an electrode plate and an AC impedance meter according to the present embodiment.

DESCRIPTION OF EMBODIMENTS

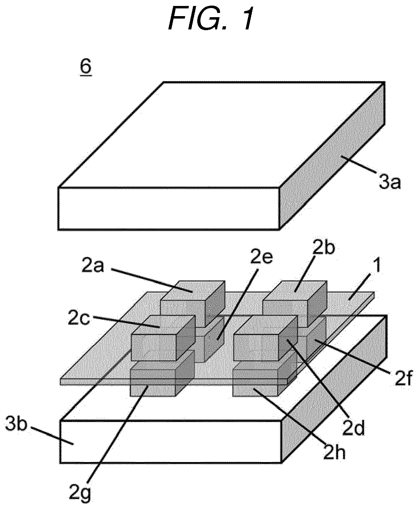

Hereinafter, embodiments according to the present invention will be described with reference to Fig. 1 to Fig. 5.

Fig. 1 illustrates a schematic configuration view of a measurement jig used for measuring proton conductivity.

First, a disposition relationship between an electrolyte film and an electrode plate at the time of measuring proton conductivity in Fig. 1 will be described. In the configuration, electrode plates 2a to 2h are disposed at positions facing each other such that electrolyte film 1 is interposed therebetween. The electrode plates are respectively fixed to resin housing 3a and resin housing 3b.

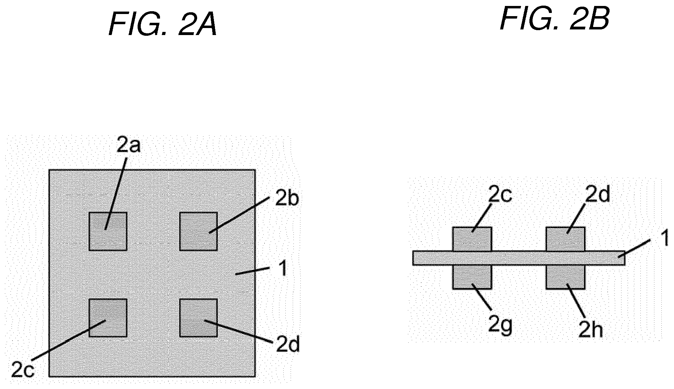

Fig. 2A is a plan view viewed from the top of the electrolyte film. Fig. 2B is a plan view viewed from a side of the electrolyte film. Portions, which face each other, of electrode plates 2a to 2d and electrode plates 2e and 2h act as electrodes.

It is preferable that areas of the electrodes are greater than or equal to 100 $\mu m^2$ and less than or equal to 10 $mm^2$. In case where the areas are less than 100 $\mu m^2$, it is difficult for the electrodes to correctly face each other, and thus, correct measurement may not be performed. In case where the areas are greater than 10 $mm^2$, a contact between the electrode and the electrolyte film is destabilized and thus, correct measurement may not be performed.

In Fig. 1, the electrolyte film and the electrodes are respectively illustrated at intervals so as to have apparent position relationships therebetween, but in case of actual measurement, the electrolyte film and the electrodes are disposed to be in contact with each other.

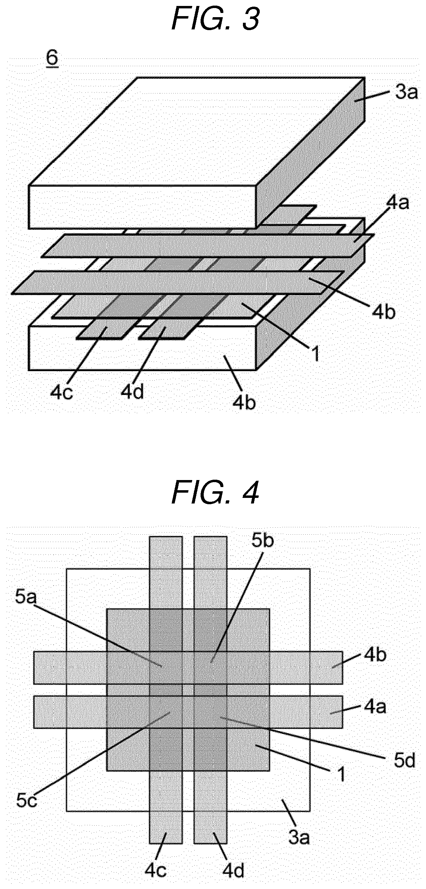

Fig. 3 is a schematic view of a measurement jig used for measuring the proton conductivity according to another embodiment.

A disposition relationship between the electrolyte film and the electrode at the time of measuring the proton conductivity in Fig. 3 will be described. In the configuration, electrode plates 4a to 4d are disposed at a location where the electrode plates are orthogonal to each other such that electrolyte film 1 is interposed therebetween. The electrode plates are respectively fixed to resin housings 3a and 3b.

Fig. 4 is a plan view viewed from the top of the electrolyte film. Portions at which electrode plates 4a and 4b intersect electrode plates 4c and 4d act as electrode sections 5a to 5d. In Fig. 3, the electrolyte film and the electrodes are respectively illustrated at intervals so as to have apparent position relationships therebetween, but in case of actual measurement, the electrolyte film and the electrodes are disposed to be in contact with each other.

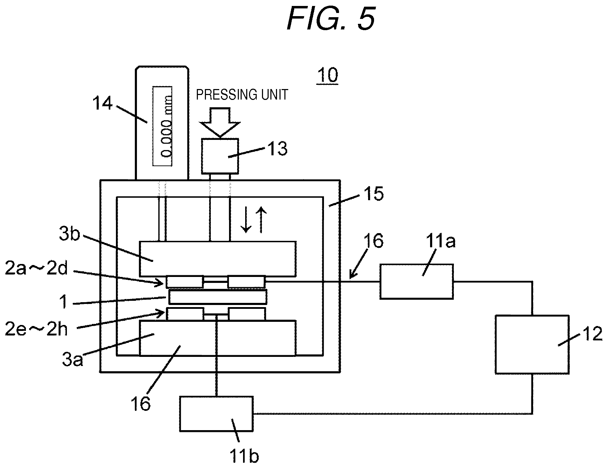

Fig. 5 is a schematic view illustrating a proton conductivity measurement device.

Above-described measurement jig 6 is disposed in proton conductivity measurement device 10 including pressure sensing element 13 and thickness gauge 14. Pressure is applied to measurement jig 6 by a pressing unit, monitored by pressure sensing element 13, and adjusted to be approximately 1 N to 10 N. Thickness gauge 14 measures the height of an upper surface of the measurement jig at this time, and a difference between the height at this time and height of the upper surface when the electrolyte film is not disposed is set to a thickness of the electrolyte film.

In the disposition, in order to calculate proton conductivity of the electrolyte film, a voltage is measured in a thickness direction of the electrolyte film in a state where a current generated by an AC wave is provided. In the measurement, an impedance value is measured by using AC impedance meter 12.

If an impedance value obtained from the measurement result is referred to as R, the thickness (that is, a distance between the electrodes) of the electrolyte film is referred to as L, and areas of a pair of electrodes are referred to as S, proton conductivity $\sigma$ of the electrolyte film is obtained by the following Equation (1) .

$$\sigma = L/RS \qquad (1)$$

In the method, at least three pairs of electrode plates are selected individually or in a combined manner by signal selectors 11a and 11b connected to wires drawn out from each electrode plate, and then, measurement is performed.

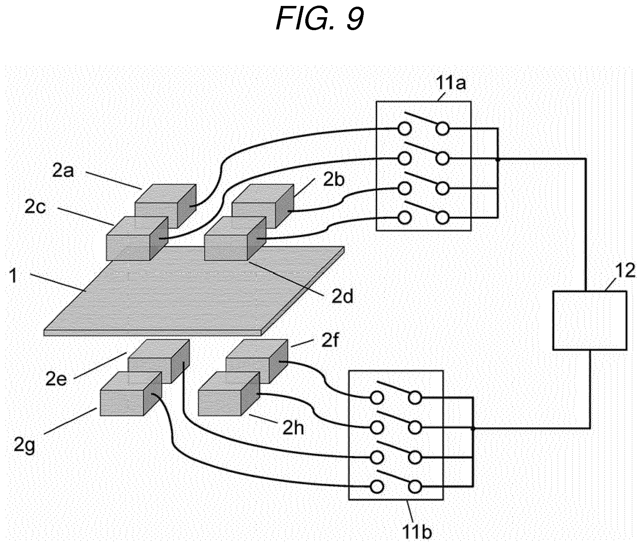

Fig. 9 is a diagram illustrating a connection relationship between the electrode plate and the AC impedance meter.

In the present figure, electrode plates 2a to 2d are connected to AC impedance meter 12 through signal selector 11a. Electrode plates 2e to 2h are connected to AC impedance meter 12 through signal selector 11b.

When one pair of electrode plates is measured, electrode plate 2a is selected by signal selector 11a for a connection, electrode plate 2e is selected by signal selector 11b for a connection, and thereby measurement is performed. In the same manner, electrode plate 2b and electrode plate 2f are connected, electrode plate 2c and electrode plate 2g are connected, and electrode plate 2d and electrode plate 2h are connected, and then measurements therefor are performed.

When two pairs of electrode plates are measured, electrode plates 2a and 2b and electrode plates 2e and 2f are connected. In the same manner, electrode plates 2c and 2d and electrode plates 2g and 2h are connected, electrode plates 2a and 2d and electrode plates 2e and 2h are connected, and electrode plates 2b and 2c and electrode plates 2f and 2g are connected. When three pairs of electrode plates are measured, electrode plates 2a to 2c and electrode plates 2e and 2g are connected.

In the same manner, electrode plates 2a, 2b, and 2d and electrode plates 2e, 2f, and 2h are connected, electrode plates 2a, 2c, and 2d and electrode plates 2e, 2g, and 2h are connected, and electrode plates 2b, 2c, and 2d and electrode plates 2f, 2g, and 2h are connected. When four pairs of electrode plates are measured, electrode plates 2a to 2d and electrode plates 2e to 2h are connected.

If two pairs of electrodes are connected in parallel, the area thereof is doubled. If three pairs of electrodes are connected in parallel, the area thereof is tripled. If four pairs of electrodes are connected in parallel, the area thereof is quadrupled. At this time, impedance values thereof are ideally R/2, R/3, and R/4, respectively.

If a reciprocal number (1/S) of an area is plotted in a horizontal axis and an impedance value is plotted in a vertical axis, a slope ($\Delta$R) is obtained by linear approximation. Proton conductivity $\sigma$ of the electrolyte film can be calculated by following Equation (2).

$$\sigma = L/\Delta R \qquad (2)$$

In Fig. 1, Fig. 2, and Fig. 9, four electrode plates are respectively illustrated such that the measurement method is apparent, but in case where actual measurement is performed, as long as two electrode plates or more are respectively provided, the electrode plates are usable. The number of electrodes is greater than or equal to three pairs and preferably smaller than or equal to 100 pairs. In case where the number of electrodes is smaller than three pairs, a point which is a linear approximation target at the time of calculating $\Delta$R is smaller, and thus, a correct value is not calculated. In case where the number of electrodes is greater than 100 pairs, time required for measurement is longer, and thus it is not practical.

According to the present embodiment, measurement is performed while an electrode area is changed by using multiple pairs of electrodes, and thus, it is possible to increase measurement accuracy.

(Example)

[Production of Measurement Jig]

An electrode plate is made of iron, and plated with gold. The electrode plate has a ring shape with a diameter of 0.9 mm, and each of nine electrodes is fixed to a resin housing produced by a poly phenylene sulfide resin so as to face each other in a manner in which a subject is interposed therebetween.

[Installation of Target to be Measured]

Electrolyte films (model numbers: NR-211, NR-212, N115, and N117, made by DUPONT Co., Ltd.) having thicknesses different from each other are prepared as targets to be measured. One electrolyte film (angle of 10 mm) is disposed between electrode plates, and pressure is adjusted to 1 N by using a micrometer head (model number: SHPC-10, made by Sigma Koki Co., Ltd.) as a pressing unit and a pressure sensing element (model number: LMA-A-20N made by Kyowa Electronic Instrument Co., Ltd.) as a pressure measurement unit.

[Method of Measuring Distance between Electrodes]

A thickness gauge (model number: GT2-H12K, made by Keyence Corporation) is prepared. First, measurement is performed in a state where there is no electrolyte film. Subsequently, measurement is performed in a state where the electrolyte film is disposed. A difference between the measured two values is set to a thickness L of the electrolyte film.
The results are represented in Table 1.

Table 1

| | | Thickness L ($\mu$m) | $\Delta$R ($\Omega$ cm$^2$) | Proton Conductivity $\sigma$ (S/cm) |
|---|---|---|---|---|
| Example | NR-211 | 26.98 | 0.082 | 0.033 |
| | | 27.08 | 0.067 | 0.040 |
| | | 26.95 | 0.084 | 0.032 |
| | NR-212 | 51.62 | 0.110 | 0.047 |
| | | 51.44 | 0.106 | 0.049 |
| | | 51.76 | 0.098 | 0.052 |
| | N115 | 122.58 | 0.157 | 0.078 |
| | | 122.34 | 0.166 | 0.074 |
| | | 122.70 | 0.149 | 0.083 |
| | N117 | 178.51 | 0.209 | 0.085 |
| | | 177.40 | 0.192 | 0.093 |
| | | 177.76 | 0.189 | 0.094 |

[Method of Measuring Impedance Value]

An AC impedance meter (model number: 3532-80, made by Hioki E. E. Corporation) is prepared. An AC wave with a frequency of 10 kHz to 1 MHz and an amplitude of 10 mV is applied. A frequency with a phase of zero degrees obtained by AC impedance measurement is selected as the frequency of the AC wave. Impedance values of one pair of electrode units, two pairs of electrode units, three pairs of electrode units, four pairs of electrode units, six pairs of electrode units, and nine pairs of electrode units are measured by the signal selector.

[Method of Calculating Proton Conductivity]

Data is plotted as a graph in which a vertical axis denotes the measured impedance values and a horizontal axis denotes reciprocal numbers of the areas of the electrode units. The slope (ΔR) of a linear approximation straight line of the obtained graph is obtained.

Proton conductivity σ of the electrolyte film is calculated by the Equation (2). The calculated results are represented in Table 1.

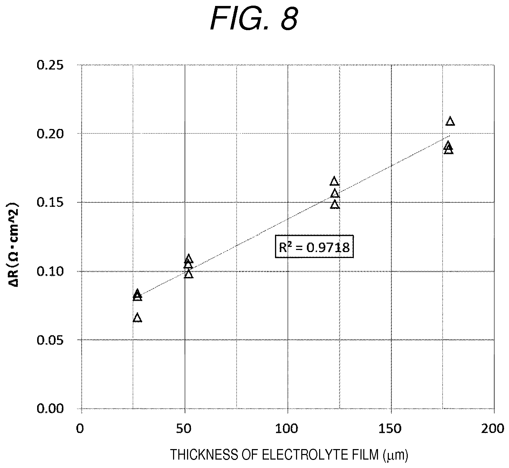

The results of Table 1 are plotted in Fig. 8 as a graph. A horizontal axis denotes a thickness of the electrolyte film, and a vertical axis denotes ΔR. ΔR that is the main factor for calculating the proton conductivity is linearly displaced depending on a change of the thickness of the electrolyte film, and a correlation coefficient thereof is also high.

According to the present measurement method, it is confirmed that ΔR of the electrolyte film in a "thickness direction", that is, the proton conductivity can be accurately measured.

According to the method of calculating proton conductivity of the present embodiment, the proton conductivity of the electrolyte film in the "thickness direction" can be simply and accurately calculated. Evaluation in the "thickness direction " can be used for structural development for increasing durability of the electrolyte film or power generation performance. A polymer electrolyte fuel cell operates at a low temperature, has characteristics in which density of an output current is high and miniaturization can be made, and can be used for a domestic cogeneration system, a fuel cell vehicle, a base station for mobile communication, or the like.

**Claims**

1. A method of calculating proton conductivity (σ) of an electrolyte film, comprising:

   configuring an electrolyte film (1) to be measured interposed between at least three pairs of electrodes (2a-2h, 5a-5d);
   measuring the impedance of the electrodes pairs (2a-2h, 5a-5d) while an electrode area is changed by using the electrodes pairs (2a-2h, 5a-5d) individually and connected in parallel;
   calculating the amount of change (ΔR) of impedance values with respect to a change of areas (S) of the electrodes; and
   calculating proton conductivity of said film (1) from the calculated amount of change (ΔR) and the thickness (L) of the film.

2. The method of measuring proton conductivity of Claim 1,
   wherein the at least three pairs of electrodes (2a-2h, 5a-5d) are connected to an AC impedance meter (12) through a signal selector (11a, 11b) that is connected to each of the electrodes.

3. The method of measuring proton conductivity of Claim 2,
   wherein an area of one pair of the at least three pairs of electrodes (2a-2h, 5a-5d) is greater than or equal to 100 $\mu$m$^2$ and less than or equal to 10 mm$^2$.

4. The method of measuring proton conductivity of Claim 3,
   wherein a number of the multiple pairs of electrodes (2a-2h, 5a-5d) is greater than or equal to three pairs and less than or equal to 100 pairs.

5. A proton conductivity measurement device adapted to perform the method of any of claims 1 to 4, comprising:

   a housing (3a, 3b);
   at least three pairs of electrodes (2a-2h, 5a-5d), wherein the pairs of electrodes are fixed to the housing (3a, 3b) and arranged such that an electrolyte film can be interposed between each of the pairs of the electrode;
   a signal selector (11a, 11b) that is electrically connected to the pairs of electrodes (2a-2h, 5a-5d) and configured to select the pairs of electrodes (2a-2h, 5a-5d) individually and to connect the pairs of electrodes (2a-2h, 5a-5d) in parallel to change an electrode area;
   an AC impedance meter (12) configured to measure AC impedance of the electrolyte film (1) to be measured from an impedance value which is measured through the signal selector (11a, 11b);
   a thickness gauge (14) configured to measure a thickness of the electrolyte film (1) to be measured; and
   a pressing unit (13) configured to apply a load to the electrodes (2a-2h, 5a-5d) fixed to the housing (3a, 3b).

**Patentansprüche**

1. Verfahren zum Berechnen der Protonenleitfähigkeit ($\sigma$) eines Elektrolytfilms, umfassend:

   Konfigurieren eines zu messenden Elektrolytfilms (1), der zwischen zumindest drei Elektrodenpaare (2a-2h, 5a-5d) gelegt ist;
   Messen der Impedanz der Elektrodenpaare (2a-2h, 5a-5d), während ein Elektrodenbereich verändert wird, indem die Elektrodenpaare (2a-2h, 5a-5d) einzeln verwendet und parallelgeschaltet werden;
   Berechnen des Änderungsausmaßes ($\Delta R$) der Impedanzwerte in Bezug auf eine Änderung der Bereiche (S) der Elektroden; und
   Berechnen der Protonenleitfähigkeit des Films (1) aus dem berechneten Änderungsausmaß ($\Delta R$) und der Dicke (L) des Films.

2. Verfahren zum Messen der Protonenleitfähigkeit nach Anspruch 1,
   wobei die zumindest drei Elektrodenpaare (2a-2h, 5a-5d) durch einen mit jeder der Elektroden verbundenen Signalwähler (11 a, 11 b) mit einem AC-Impedanzmessgerät (12) verbunden sind.

3. Verfahren zum Messen der Protonenleitfähigkeit nach Anspruch 2,
   wobei ein Bereich eines Paares der zumindest drei Elektrodenpaare (2a-2h, 5a-5d) größer als oder gleich 100 pm$^2$ und kleiner als oder gleich 10 mm$^2$ ist.

4. Verfahren zum Messen der Protonenleitfähigkeit nach Anspruch 3,
   wobei eine Anzahl der mehreren Elektrodenpaare (2a-2h, 5a-5d) größer als oder gleich drei Paaren und kleiner als oder gleich 100 Paaren ist.

5. Protonenleitfähigkeitsmessvorrichtung, die so angepasst ist, dass sie das Verfahren eines der Ansprüche 1 bis 4 durchführt, umfassend:

   ein Gehäuse (3a, 3b);
   zumindest drei Elektrodenpaare (2a-2h, 5a-5d), wobei die Elektrodenpaare am Gehäuse (3 a, 3b) befestigt und so angeordnet sind, dass ein Elektrolytfilm zwischen jedes der Elektrodenpaare gelegt werden kann;
   einen Signalwähler (11a, 11b), der elektrisch mit den Elektrodenpaaren (2a-2h, 5a-5d) verbunden und so konfiguriert ist, dass er die Elektrodenpaare (2a-2h, 5a-5d) einzeln wählt und die Elektrodenpaare (2a-2h, 5a-5d) parallelschaltet, um einen Elektrodenbereich zu ändern;
   ein Wechselstrom-Impedanzmessgerät (12), das so konfiguriert ist, dass es die Wechselstrom-Impedanz des zu messenden Elektrolytfilms (1) aus einem Impedanzwert misst, der durch den Signalwähler (11a, 11b) gemessen wird;
   ein Dickenmessgerät (14), das so konfiguriert ist, dass es eine Dicke des zu messenden Elektrolytfilms (1) misst; und
   eine Presseinheit (13), die so konfiguriert ist, dass sie eine Last auf die am Gehäuse (3a, 3b) befestigten Elektroden (2a-2h, 5a-5d) aufbringt.

**Revendications**

1. Procédé de calcul de la conductivité protonique ($\sigma$) d'un film électrolytique, comprenant les étapes consistant à :

   configurer un film électrolytique (1) à mesurer, interposé entre au moins trois paires d'électrodes (2a-2h, 5a-5d) ;
   mesurer l'impédance des paires d'électrodes (2a-2h, 5a-5d) pendant qu'une superficie d'électrode est modifiée en utilisant les paires d'électrodes (2a-2h, 5a-5d) individuellement et connectées en parallèle ;
   calculer la quantité de modification ($\Delta R$) des valeurs d'impédance par rapport à une modification des superficies (S) des électrodes ; et
   calculer la conductivité protonique dudit film (1) à partir de la quantité de modification ($\Delta R$) et de l'épaisseur (L) du film.

2. Procédé de mesure de conductivité protonique selon la revendication 1,
   dans lequel les au moins trois paires d'électrodes (2a-2h, 5a-5d) sont connectées à un impédancemètre CA (12) à travers un sélecteur de signal (11a, 11b) qui est connecté à chacune des électrodes.

3. Procédé de mesure de conductivité protonique selon la revendication 2, dans lequel une superficie d'une paire des au moins trois paires d'électrodes (2a-2h, 5a-5d) est supérieure ou égale à 100 $\mu m^2$ et inférieure ou égale à 10 $mm^2$.

4. Procédé de mesure de conductivité protonique selon la revendication 3, dans lequel un nombre des multiples paires d'électrodes (2a-2h, 5a-5d) est supérieur ou égal à trois paires et inférieur ou égal à 100 paires.

5. Dispositif de mesure de conductivité protonique adapté pour effectuer le procédé de l'une quelconque des revendications 1 à 4, comprenant :

un boîtier (3a, 3b) ;
au moins trois paires d'électrodes (2a-2h, 5a-5d), dans lequel les paires d'électrodes sont fixées au boîtier (3a, 3b) et agencées de telle sorte qu'un film électrolytique puisse être interposé entre chacune des paires de l'électrode ;
un sélecteur de signal (11a, 11b) qui est connecté électriquement aux paires d'électrodes (2a-2h, 5a-5d) et configuré pour sélectionner les paires d'électrodes (2a-2h, 5a-5d) individuellement et pour connecter les paires d'électrodes (2a-2h, 5a-5d) en parallèle pour la modification d'une superficie d'électrode ;
un impédancemètre CA (12) configuré pour mesurer une impédance CA du film électrolytique (1) à mesurer à partir d'une valeur d'impédance qui est mesurée à travers le sélecteur de signal (11a, 11b) ;
une jauge d'épaisseur (14) configurée pour mesurer une épaisseur du film électrolytique (1) à mesurer ; et
une unité de pressage (13) configurée pour appliquer une charge aux électrodes (2a-2h, 5a-5d) fixées au boîtier (3a, 3b) .

# FIG. 1

<u>6</u>

EP 3 070 461 B1

## FIG. 2A

## FIG. 2B

## FIG. 3

## FIG. 4

FIG. 5

## FIG. 6

RELATED ART

## *FIG. 7*

PRESSING UNIT

RELATED ART

# FIG. 8

## FIG. 9

EP 3 070 461 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5193394 B
- JP 5131671 B
- JP 4268100 B

**Non-patent literature cited in the description**

- **SOBOLEVA et al.** *Journal of Electroanalytical Chemistry,* 2008, vol. 622, 145-152
- **ARVAY et al.** *Journal of Power Sources,* 2012, vol. 213, 317-337
- **ZAPATA et al.** *Electrochimica Acta,* 2009, vol. 54, 3899-3909